# EUROPÄISCHE PATENTSCHRIFT

(11) **EP 3 236 637 B1**
(45) Veröffentlichungstag und Bekanntmachung des Hinweises auf die Patenterteilung: **09.12.2020**
(21) Anmeldenummer: 16171666.7
(22) Anmeldetag: 27.05.2016
(51) Int. Cl.: H04L 29/08, G06F 9/54

(54) **KOMMUNIKATION ÜBER EIN WEITVERKEHRSNETZ MITTELS EINES APPLIKATIONSSPEZIFISCHEN PROTOKOLLS**
COMMUNICATION OVER A WIDE AREA NETWORK BY MEANS OF AN APPLICATION-SPECIFIC PROTOCOL
COMMUNICATION PAR L'INTERMEDIAIRE D'UN RÉSEAU DE TRAFIC À GRANDE DISTANCE À L'AIDE D'UN PROTOCOLE D'APPLICATION SPÉCIFIQUE

(30) Priorität: 22.04.2016 EP 16166645
(43) Veröffentlichungstag der Anmeldung: 25.10.2017
(73) Patentinhaber: Siemens Aktiengesellschaft, 80333 München (DE)
(72) Erfinder: Milovanovic, Igor, 90491 Nürnberg (DE); Bitz, Alexander, 76149 Karlsruhe (DE); Bär, Andreas, 66954 Pirmasens (DE); Füßlein, Wolfgang, 76879 Essingen (DE)

(56) Entgegenhaltungen:
- DAVID INGRAM: "Reconfigurable middleware for high availability sensor systems", DISTRIBUTED EVENT-BASED SYSTEMS, ACM, 2 PENN PLAZA, SUITE 701 NEW YORK NY 10121-0701 USA, 6. Juli 2009 (2009-07-06), Seiten 1-11, XP058191272, DOI: 10.1145/1619258.1619285 ISBN: 978-1-60558-665-6

## Beschreibung

Die Erfindung betrifft ein Verfahren zur Kommunikation zwischen einem ersten Rechner, einem zweiten Rechner und einem Automatisierungssystem mittels eines applikationsspezifischen Protokolls über ein Weitverkehrsnetz.

In dem Buch "Proceedings of the Third ACM International Conference on Distributed Event-Based Systems", ISBN: 978-1-60558-665, und dem Artkel von DAVID INGRAM: "Reconfigurable middleware for high availability sensor systems", wird ein Verfahren aufgezeigt, dass es ermöglicht von Sensoren erzeugte Daten effizient zu verteilen. Auch wird erwähnt, dass das Verfahren im Bereich der "factory automation" zum Einsatz kommen kann. Aber ein konkreter Lösungsansatz bleibt offen.

Applikationsspezifische Protokolle sind hier als Kommunikationsprotokolle zu verstehen, die eigens für die jeweilige Applikation entwickelt wurden. Diese Applikation kann beispielsweise die Kommunikation zwischen einem Automatisierungsprogramm und einer Automatisierungsvorrichtung sein. Solche Protokolle sind demnach von Hersteller zu Hersteller verschieden und oft proprietär. Applikationsspezifische Protokolle sind des Weiteren oftmals nur zur Kommunikation über ein lokales Netzwerk ausgebildet, da sie entweder nicht auf den Konventionen/Protokollen basieren, wie sie in Weitverkehrsnetzen gelten (wie bspw. TCP/IP) oder da ihnen schlichtweg Sicherheitsmechanismen zur Übertragung über öffentliche oder zumindest teilöffentliche Netzwerke fehlen.

Applikationsspezifische Protokolle kommen bei der Kommunikation zwischen Automatisierungs- oder Engineering-Software und der entsprechenden Automatisierungshardware zum Einsatz. Es ist daher wünschenswert eine für die Hard- und Software transparente Möglichkeit zu schaffen um applikationsspezifische Protokolle auch für Weitverkehrsnetze zu ertüchtigen. Derartige Anwendungen sind insbesondere für Remote-, Cloud, und/oder Industrie 4.0 Anwendungen relevant.

Aufgabe der vorliegenden Erfindung ist es, ein Verfahren anzugeben, das eine für ein Automatisierungsprogramm und deren applikationsspezifisches Protokoll transparente Verbindung über lokale Netzwerkgrenzen hinaus schafft und das effizient implementierbar ist. Des Weiteren soll auch ein Automatisierungssystem und ein Rechner zur Lösung dieser Aufgabe angegeben werden.

Die Aufgabe wird gelöst durch ein Verfahren zur Kommunikation, insbesondere zum Austausch von Daten, zwischen einem ersten Rechner, einem zweiten Rechner und mindestens einer Automatisierungsvorrichtung mittels eines applikationsspezifischen Protokolls über ein Weitverkehrsnetz, wobei einer der Rechner eine lokale Netzwerkverbindung zur Automatisierungsvorrichtung aufweist, wobei das applikationsspezifische Protokoll eine Anwendungsschicht aufweist und wobei der erste Rechner ein erstes Automatisierungsprogramm ausführt und der zweite Rechner ein zweites Automatisierungsprogramm ausführt, umfassend die folgenden Schritte:
- Registrieren einer ersten Ereignisschleife mit einer ersten Identifikation in der Anwendungsschicht des applikationsspezifischen Protokolls eines der Rechner,
- Erstellen eines Kommunikationskanals zwischen dem ersten Rechner und dem zweiten Rechner,
- Registrieren einer zweiten Ereignisschleife mit einer zweiten Identifikation in der Anwendungsschicht des applikationsspezifischen Protokolls des jeweilig anderen Rechners und Hinterlegen der ersten Identifikation,
- Hinterlegen der Identifikation der Ereignisschleife, für die die Daten bestimmt sind, in den Daten,
- Übergabe der Daten an eine Sendefunktion
- Benachrichtigen der Ereignisschleife, deren Identifikation in den Daten hinterlegt ist, dass die Daten zur Übertragung bereitstehen und
- Abrufen der Daten durch eine Empfangsfunktion über den Kommunikationskanal.

Eine lokale Netzwerkverbindung muss dabei nicht unbedingt ein LAN oder WLAN sein, es sind ebenso Profibus, Profinet, USB oder jegliche weitere lokale Datenverbindungen denkbar.

Daten können dabei Konfigurations- und/oder Parametrierungs-Daten für die Automatisierungsvorrichtung oder Befehle zur Ansteuerung der Automatisierungsvorrichtung sein. Statusinformationen sind ebenso als Daten denkbar, wie jegliche weitere im Automatisierungsumfeld übertragbaren Daten. Die Daten könnten dabei als Daten-Pakete oder Daten-Telegramme ausgebildet sein.

Eine Automatisierungsvorrichtung kann dabei im einfachsten Fall eine einzige PLC oder eine einzige Automatisierungskomponente sein. Die Automatisierungsvorrichtung kann andererseits auch eine beliebige Komplexität, z.B. eine Kombination von verschiedenen Automatisierungsgeräten, annehmen.

Ein Rechner kann dabei ein PC, ein Industrie-PC oder jeglicher weiterer Rechner sein. Auch tragbare Geräte wie Smartphones, Tablets oder Laptops sind als Rechner denkbar.

Weitverkehrsnetze (englisch "Wide Area Network" oder WAN) sollen hier Netzwerke wie beispielsweise das Internet darstellen, die sich von den lokalen Netzwerken durch ihre entsprechend größere flächenmäßige Ausdehnung abgrenzen. Die Weitverkehrsnetze können dabei beispielsweise zur Verbindung zweier Fertigungsstandorte verwendet werden.

Die Kommunikation zwischen den Automatisierungsprogrammen und der Automatisierungsvorrichtung kann dabei auch die Konfiguration der Automatisierungsvorrichtung umfassen.

Eine Ereignisschleife (englisch "event loop") ist dabei ein Programmkonstrukt, das auf Ereignisse oder Meldungen wartet und sie innerhalb eines Programms verteilt. Jede Ereignisschleife weist dabei eine eindeutige Identifikation auf. Die Identifikation kann dabei eine einfache Nummer bis hin zu einer komplexen Adresse sein.

Applikationsspezifische Protokolle weisen, wie genormte Kommunikationsprotokolle (z.B. TCP/IP), einen so genannten Kommunikationsstack auf. Dieser Stack ist aus mehreren Schichten aufgebaut, wie es beispielsweise aus dem OSI-Modell (englisch Open Systems Interconnection Model) bekannt ist. Die unteren Schichten, meist Schichten 1 bis 4, sind dabei für die Bit-Übertragung, die Sicherung, die Vermittlung von Paketen und den Transport von Nachrichten zuständig. Die oberen Schichten sind dabei in der Regel anwendungsabhängig. Diese oberen Schichten sollen für das applikationsspezifische Protokoll im Folgenden als Anwendungsschichten bezeichnet werden. Es ist dabei denkbar, dass lediglich die alleroberste Schicht, also beispielsweise Schicht 7 die Anwendungsschicht ist, und das erfindungsgemäße Verfahren direkt unterhalb der Anwendungsschicht (z.B. Schicht 7) ausgeführt wird. Dies hat den Vorteil, dass die zu übertragenden Daten noch nicht in unterlagerte Kommunikationsschichten gepackt sind. Eine Anwendungsschicht ist dabei bspw. eine Schicht des OSI-Modells oder im Englischen der sog. "Application Layer". Durch das Hinterlegen der Ereignisschleifen in den Anwendungsschichten ist es möglich, dass das applikationsspezifische Protokoll z.B. über einen HTTPS-Tunnel über ein Weitverkehrsnetz anwendbar ist.

Kommunikationsoperationen, wie beispielsweise Senden oder Empfangen, werden in der Anwendungsschicht durch Stellvertretermethoden ersetzt. Diese Stellvertretermethoden können dann alle Aufrufe, unabhängig davon, für welches applikationsspezifische Protokoll sie ursprünglich gedacht waren, in ein standardisiertes Protokoll, wie beispielsweise TCP/IP, umgesetzt werden. Mit diesen Stellvertretermethoden können die Kommunikationsoperationen und -funktionen des applikationsspezifischen Protokolls über eine beliebige Standardverbindung über das Netzwerk getunnelt werden. Dies können beispielsweise VPN-Verbindungen sein oder ebenso TCP- oder HTTPS-Verbindungen.

Das Automatisierungsprogramm, das eine lokale Netzwerkverbindung zur Automatisierungsvorrichtung aufweist, dessen Rechner also eine lokale Netzwerkverbindung zur Automatisierungsvorrichtung aufweist, ist in der Regel zur Kommunikation über ein applikationsspezifisches Protokoll in dem lokalen Netzwerk (z.B. LAN) ausgebildet.

Da durch das erfindungsgemäße Verfahren die Signalisierungen aus den unterlagerten Kommunikationsschichten fehlen, werden diese erfindungsgemäß durch das Einführen von Ereignisschleifen auf beiden Seiten der Kommunikation nachgebildet.

Bei dem Kommunikationskanal kann es sich beispielsweise um einen so genannten call-back-communication-channel handeln, der über TCP- oder HTTPS- oder vergleichbare Protokolle erstellt werden kann. Über diesen Kommunikationskanal werden die Befehle, die sonst direkt über den Kommunikationsstack des applikationsspezifischen Protokolls bearbeitet werden, getunnelt.

In einer vorteilhaften Ausgestaltung des Verfahrens werden Funktionen derart ausgeführt, dass ein Proxy die Funktionen als Proxyfunktionen bereitstellt und diese über den Kommunikationskanal aufruft. Beispielsweise werden die Funktionen auf einem Rechner durch den Proxy bereitgestellt. Für den Rechner und dessen Automatisierungssoftware spielt es zunächst keine Rolle ob er die echten Funktionen aufruft oder die ursprünglichen Funktionen durch Proxyfunktionen ersetzt wurden. Der Proxy übernimmt dann die Funktionsaufrufe und ruft diese dann auf dem jeweils anderen Rechner auf. Die Benachrichtigung erfolgt jeweils über die Ereignisschleifen. Der Proxy hat den Vorteil, dass so einfach die bekannten Funktionen weiterverwendet werden können und das Automatisierungsprogramm nicht verändert werden muss.

In einer weiteren Ausgestaltung des Verfahrens ist der Kommunikationskanal zwischen dem ersten Rechner und dem zweiten Rechner als Kommunikationskanal für Rückrufe ausgebildet. Dieser Kanal, im englischen auch "callback communication channel" genannt ermöglichen Rückrufe über das Netzwerk, sog. "network callbacks". Diese Ausgestaltung nutzt die Rückrufe um eine effizientere Implementierung des Verfahrens zu erreichen.

In einer weiteren Ausgestaltung des Verfahrens sind Benachrichtigungen über den Kommunikationskanal als Rückrufe ausgebildet. Dies ist die konsequente Anwendung der Rückruffunktionalitäten auf das Verfahren.

In einer weiteren Ausgestaltung des Verfahrens sind die Ereignisschleifen als nicht sichtbare Fenster des Betriebssystems der Rechner oder der Automatisierungsprogramms ausgebildet. So können bestehende Kommunikationsfunktionen des Betriebssystems oder des Automatisierungsprogramms weiter verwendet werden ohne den Nutzer oder die Kommunikation zu beeinträchtigen.

In einer weiteren Ausgestaltung des Verfahrens ist der Kommunikationskanal als ein TCP- oder ein HTTPS-Tunnel ausgebildet. Die Verwendung von einem Tunnel auf einer der oberen Schichten des OSI Modells hat den Vorteil, dass diese einfach handhabbar sind, insbesondere im Vergleich zu VPN Verbindungen.

Die Aufgabe wird weiterhin durch ein Automatisierungssystem gelöst, das einen ersten Rechner, einen zweiten Rechner und mindestens eine Automatisierungsvorrichtung aufweist.

Der erste Rechner ist mit dem zweiten Rechner über ein Weitverkehrsnetz verbindbar, wobei der erste Rechner, der zweite Rechner und die Automatisierungsvorrichtung zur Kommunikation mittels eines applikationsspezifischen Protokolls über ein Weitverkehrsnetz ausgebildet sind und das applikationsspezifische Protokoll eine Anwendungsschicht aufweist. Einer der Rechner weist ferner eine lokale Netzwerkverbindung zur Automatisierungsvorrichtung auf. Auf dem ersten Rechner ist ein erstes Automatisierungsprogramm ausführbar und auf dem zweiten Rechner ein zweites Automatisierungsprogramm. Verbindungen zwischen dem ersten Rechner und dem zweiten Rechner sind mittels eines Kommunikationskanals über das Weitverkehrsnetz herstellbar und die Rechner und/oder die Automatisierungsprogramme sind zur Durchführung eines erfindungsgemäßen Verfahrens ausgebildet.

Eine vorteilhafte Weiterbildung eines Automatisierungssystems weist einen Proxy auf, der zur Bereitstellung von Funktionen als Proxyfunktionen und zum Aufrufen der Funktionen über den Kommunikationskanal auf dem jeweils anderen Rechner ausgebildet ist. Der Proxy übernimmt dann die Funktionsaufrufe und ruft diese dann auf dem jeweils anderen Rechner auf. Die Benachrichtigung erfolgt jeweils über die Ereignisschleifen. Der Vorteil liegt hier in der einfachen Implementierung und der Tatsache, dass keine Änderungen am Automatisierungssystem notwendig sind.

In einer weiteren vorteilhaften Ausführungsform eines Automatisierungssystems ist einer der Rechner als ein Teil der Automatisierungsvorrichtung ausgebildet. Dies ist insbesondere bei hochintegrierten Anwendungen von Vorteil, da hier z.B. mit modernen und leistungsfähigen Systems-on-a-Chip sog. SOCs, die Funktionalität eines derartigen Rechners direkt in die Automatisierungsvorrichtung integriert werden kann.

In einer weiteren vorteilhaften Ausführungsform eines Automatisierungssystems ist einer der Rechner als ein virtuelles System ausgebildet. Insbesondere mit modernen Virtualisierungstechniken bzw. Cloud-Anwendungen ist es möglich das erfindungsgemäße Verfahren auf derartigen Systemen durchzuführen. Dies ist besonders effizient und zukunftssicher.

Im Folgenden wird die Erfindung anhand der in den Figuren dargestellten Ausführungsbeispiele näher beschrieben und erläutert. Es zeigen:
- FIG 1: ein Automatisierungssystem und
- FIG 2: ein Automatisierungssystem, das um ein Schema zur Kommunikation mit dem erfindungsgemäßen Verfahren erweitert wurde.

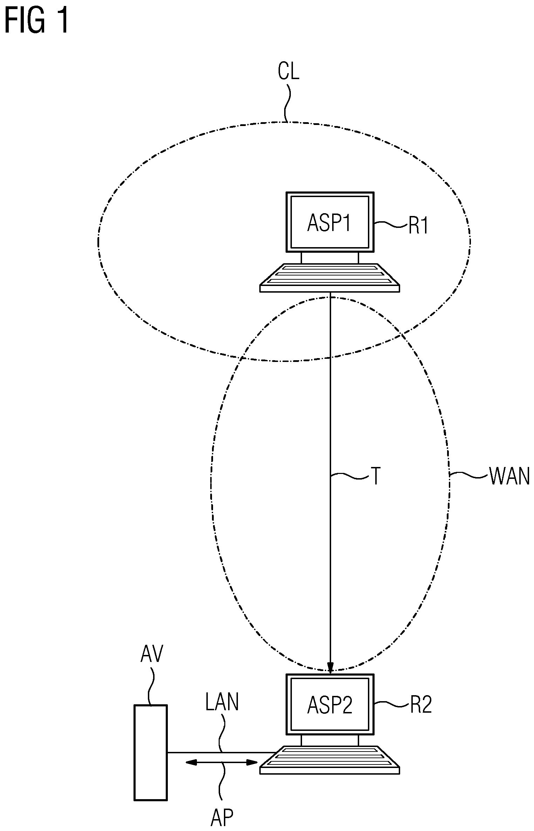

FIG 1 zeigt ganz allgemein ein System, in dem das erfindungsgemäße Verfahren zur Anwendung kommen kann. FIG 1 zeigt dabei einen ersten Rechner R1, einen zweiten Rechner R2 sowie eine Automatisierungsvorrichtung AV. Der erste Rechner R1 ist mit dem zweiten Rechner R2 über ein Weitverkehrsnetz verbunden. Der zweite Rechner R2 ist über ein lokales Netzwerk LAN mit der Automatisierungsvorrichtung AV verbunden. Dies ist lediglich ein Beispiel und es ist ebenso denkbar, dass beide Rechner R1, R2 mit jeweils einer Automatisierungsvorrichtung AV über ein lokales Netzwerk LAN verbunden sind. Auf dem ersten Rechner R1 läuft ein erstes Automatisierungsprogramm ASP1, auf dem zweiten Rechner R2 läuft ein zweites Automatisierungsprogramm ASP2. Der erste Rechner R1 kann dabei beispielsweise ein PC sein, auf dem eine Engineering-Software als erstes Automatisierungsprogramm ASP1 läuft. Der zweite Rechner R2 kann dabei beispielsweise ein PC sein, auf dem eine Engineering-Software als zweites Automatisierungsprogramm ASP2 läuft. Die Automatisierungsprogramme ASP1, ASP2 kommunizieren über den Tunnel T. Der Tunnel T kann dabei als ein TCP- oder ein HTTPS-Tunnel ausgebildet sein. Jegliche weitere Tunnelprotokolle sind ebenfalls denkbar.

Der erste Rechner R1 ist hier in einer Cloud CL dargestellt. Dies soll lediglich andeuten, dass der erste Rechner R1 sowohl virtualisiert als auch physikalisch als ein Remote-Rechner ausgebildet sein kann. Die Cloud-Funktionalität ist als optional anzusehen, kann aber mit dem erfindungsgemäßen Verfahren problemlos realisiert werden.

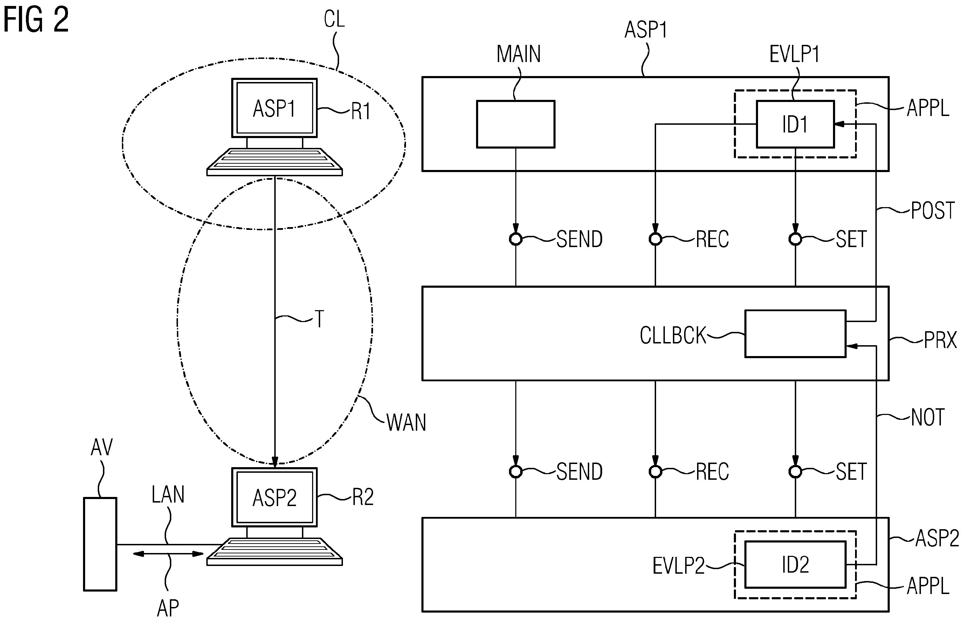

Ebenfalls dargestellt ist, dass die Automatisierungsvorrichtung AV mit dem zweiten Rechner R2 und dem darauf laufenden Automatisierungsprogramm ASP2 über ein applikationsspezifisches Protokoll AP kommuniziert. Applikationsspezifische Protokolle AP sind hier als Kommunikationsprotokolle zu verstehen, die eigens für die jeweilige Applikation entwickelt wurden. Diese Applikation kann beispielsweise die Kommunikation zwischen einem Automatisierungsprogramm und einer Automatisierungsvorrichtung, beispielsweise durch eine Engineering-Software, sein. Solche Protokolle sind demnach von Hersteller zu Hersteller verschieden und oft proprietär. Applikationsspezifische Protokolle AP sind des Weiteren oftmals nur zur Kommunikation über ein lokales Netzwerk LAN ausgebildet, da sie entweder nicht auf den Konventionen/Protokollen basieren, wie sie in Weitverkehrsnetzen WAN gelten (wie bspw. TCP/IP) oder da ihnen schlichtweg Sicherheitsmechanismen zur Übertragung über öffentliche oder zumindest teilöffentliche Netzwerke fehlen. Ziel der vorliegenden Erfindung ist es nun, auch dem ersten Rechner R1 und dem darauf laufenden Automatisierungsprogramm ASP1 die Funktionalitäten des applikationsspezifischen Protokolls AP zur Verfügung zu stellen. Da der zweite Rechner R2 über ein lokales Netzwerk LAN mit der Automatisierungsvorrichtung AV verbunden ist, kann dieser direkt über das applikationsspezifische Protokoll AP mit der Automatisierungsvorrichtung AV kommunizieren. In FIG 2 wird nun dargestellt, wie eine mögliche Ausführungsform der Erfindung eine Kommunikation bzw. das Übertragen von Daten des ersten Rechners R1 mittels eines applikationsspezifischen Protokolls AP über ein Weitverkehrsnetz WAN ermöglicht.

FIG 2 zeigt auf der linken Seite das bereits in FIG 1 dargestellte System unter Beibehaltung der Bezugszeichen. Zusätzlich ist auf der rechten Seite eine Ausgestaltung des erfindungsgemäßen Verfahrens visualisiert. Das erste Automatisierungsprogramm ASP1, das auf dem ersten Rechner R1 läuft, weist dabei eine Hauptereignisschleife MAIN und eine erste Ereignisschleife EVLP1 auf. Die Hauptereignisschleife MAIN kann dabei beispielsweise das Hauptfenster des Automatisierungsprogramms ASP1 sein oder darin ablaufen. Dem Automatisierungsprogramm ASP1 stehen in diesem Fall die drei Funktionen Senden SEND, Empfangen REC und Initialisieren SET zur Verfügung. Die Funktionen SEND, REC, SET werden in diesem Fall durch Funktionen eines Proxys PRX ersetzt. Der Proxy ersetzt die Funktionen der Anwendungsschicht APPL des ersten Rechners R1 durch seine eigenen Proxy-Funktionen, die dann in der Anwendungsschicht APPL des zweiten Rechners R2 die entsprechenden Funktionen SEND, REC, SET aufrufen. So ist es möglich, den Kommunikationsstack des applikationsspezifischen Protokolls AP über ein Weitverkehrsnetz WAN hinweg aufzuteilen und somit auch für Rechner R1, R2 verfügbar zu machen, die nicht über eine lokale Datenverbindung oder Netzwerkverbindung zur Automatisierungsvorrichtung verfügen. Es ist ebenso denkbar, dass nicht alle Funktionen innerhalb der Automatisierungsprogramme ASP1, ASP2 zur Verfügung gestellt werden, sondern durch Funktionen des verwendeten Betriebssystems oder des Proxys ersetzt werden.

Beispielhaft würde in der in FIG 2 gezeigten Visualisierung folgendes Verfahren ablaufen. In Klammern und Anführungszeichen ist dabei jeweils zum besseren Verständnis der englischsprachige Fachbegriff angegeben. Registrieren einer ersten Ereignisschleife EVLP1 ("event loop") mit einer ersten Identifikation ID1 in der Anwendungsschicht APPL ("application layer") des applikationsspezifischen Protokolls AP des ersten Rechners R1. Erstellen eines Kommunikationskanals T zwischen dem ersten Rechner R1 und dem zweiten Rechner R2. Der Kommunikationskanal T zwischen dem ersten Rechner R1 und dem zweiten Rechner R2 ist dabei als Kommunikationskanal T für Rückrufe CLLBCK ausgebildet ("callback communication channel"). Dies kann z.B. über TCP oder HTTPS geschehen.

Die Funktionen SEND, REC, SET werden von einem Proxy PRX als Proxyfunktionen bereitstellt, der diese über den Kommunikationskanal T, in diesem Fall auf dem zweiten Rechner R2, aufruft. Damit dies möglich wird, wird auf Seite des zweiten Rechners R2 in der Anwendungsschicht APPL des applikationsspezifischen Protokolls AP eine zweite Ereignisschleife EVLP2 mit einer zweiten Identifikation ID2 registriert und die erste Identifikation ID1 der ersten Ereignisschleife EVLP1 als Kommunikationspartner hinterlegt. So ist zuordenbar, welche zwei Ereignisschleifen EVLP1, EVLP2 miteinander kommunizieren, also über welche Strecke das applikationsspezifische Protokoll AP außerhalb eines lokalen Netzwerks LAN ermöglicht wird. Die Identifikationen ID1, ID2 können direkt in den Ereignisschleifen EVLP1, EVLP2 oder anderweitig in weiteren Parametern hinterlegt werden. Die erste Identifikation ID1 wird zum Zuordnen der Ereignisschleifen EVLP1, EVLP2 zueinander benötigt. Dies ist insbesondere bei Systemen von hoher Relevanz, in denen viele Automatisierungsvorrichtungen AS mit einer deutlich größeren Anzahl an Rechnern kommunizieren sollen.

Zum Senden von Daten wird die Identifikation ID1, ID2 der Ereignisschleife EVLP1, EVLP2, für die die Daten bestimmt sind, in den Daten hinterlegt. Auf diese Weise ist stets klar welche der Ereignisschleifen EVLP1, EVLP2 den Empfang der Daten durchführt. Die Daten werden an eine Sendefunktion SEND übergeben und die Ereignisschleife EVLP1, EVLP2, deren Identifikation ID1, ID2 in den Daten hinterlegt ist, wird benachrichtigt, dass die Daten zur Übertragung bereitstehen. Schließlich können die bereitstehenden Daten jedes Mal wenn eine solche Benachrichtigung eintrifft durch eine Empfangsfunktion REC über den Kommunikationskanal T abgerufen werden ("method call over a network callback channel"). Die Darstellung und Anordnung der Ereignisschleifen EVLP1, EVLP2, der Applikationsschichten APPL und der Automatisierungsprogramme ASP1, ASP2 ist hier als Beispiel zu verstehen und ist in anderen Systemen auch unter Beibehaltung des erfindungsgemäßen Verfahrens in anderer Anordnung möglich. Vorteilhaft wäre hier beispielsweise eine Ausführungsform, in der der zweite Rechner R2 als ein Teil der Automatisierungsvorrichtung AV ausgebildet ist. Die lokale Netzwerkverbindung LAN könnte dann eine interne Verbindung in der Automatisierungsvorrichtung AV sein, oder sogar nur die Kommunikation innerhalb des Betriebssystems der Automatisierungsvorrichtung AV.

Zusammenfassend betrifft die Erfindung ein Verfahren zur Kommunikation, insbesondere zum Austausch von Daten, zwischen einem ersten Rechner R1, einem zweiten Rechner R2 und mindestens einer Automatisierungsvorrichtung AV mittels eines applikationsspezifischen Protokolls AP über ein Weitverkehrsnetz WAN, wobei einer der Rechner R1, R2 eine lokale Netzwerkverbindung LAN zur Automatisierungsvorrichtung AV aufweist, wobei das applikationsspezifische Protokoll AP eine Anwendungsschicht APPL aufweist und wobei der erste Rechner R1 ein erstes Automatisierungsprogramm ASP1 ausführt und der zweite Rechner R2 ein zweites Automatisierungsprogramm ASP2 ausführt. Um ein Verfahren anzugeben, dass eine für ein Automatisierungsprogramm ASP1, ASP2 und deren applikationsspezifisches Protokoll AP transparente Verbindung über lokale Netzwerkgrenzen hinaus schafft und effizient implementierbar ist, wird vorgeschlagen die durch das erfindungsgemäße Verfahren fehlenden Signalisierungen aus den unterlagerten Kommunikationsschichten, durch das Einführen von Ereignisschleifen EVLP1, EVLP2 auf beiden Seiten der Kommunikation nachgebildet. Des Weiteren soll auch ein Automatisierungssystem und ein Rechner R1, R2 zur Lösung dieser Aufgabe angegeben werden.

## Patentansprüche

1. Verfahren zur Kommunikation, insbesondere zum Austausch von Daten, zwischen einem ersten Rechner (R1), einem zweiten Rechner (R2) und mindestens einer Automatisierungsvorrichtung (AV) mittels eines applikationsspezifischen Protokolls (AP) über ein Weitverkehrsnetz (WAN),
wobei einer der Rechner (R1, R2) eine lokale Netzwerkverbindung (LAN) zur Automatisierungsvorrichtung (AV) aufweist, wobei das applikationsspezifische Protokoll (AP) eine Anwendungsschicht (APPL) aufweist,
wobei der erste Rechner (R1) ein erstes Automatisierungsprogramm (ASP1) ausführt und der zweite Rechner (R2) ein zweites Automatisierungsprogramm (ASP2) ausführt,
**gekennzeichnet durch folgende Schritte:**
• Registrieren einer ersten Ereignisschleife (EVLP1) mit einer ersten Identifikation (ID1) in der Anwendungsschicht (APPL) des applikationsspezifischen Protokolls (AP) eines der Rechner (R1, R2),
• Erstellen eines Kommunikationskanals (T) zwischen dem ersten Rechner (R1) und dem zweiten Rechner (R2),
• Registrieren einer zweiten Ereignisschleife (EVLP2) mit einer zweiten Identifikation (ID2) in der Anwendungsschicht (APPL) des applikationsspezifischen Protokolls (AP) des jeweilig anderen Rechners (R1, R2) und Hinterlegen der ersten Identifikation (ID1),
• Hinterlegen der Identifikation (ID1, ID2) der Ereignisschleife (EVLP1, EVLP2), für die die Daten bestimmt sind, in den Daten,
• Übergabe der Daten an eine Sendefunktion (SEND)
• Benachrichtigen der Ereignisschleife (EVLP1, EVLP2), deren Identifikation (ID1, ID2) in den Daten hinterlegt ist, dass die Daten zur Übertragung bereitstehen und
• Abrufen der Daten durch eine Empfangsfunktion (REC) über den Kommunikationskanal (T).

2. Verfahren nach Anspruch 1, wobei Funktionen (SEND, REC, SET) derart ausgeführt werden, dass ein Proxy (PRX) die Funktionen (SEND, REC, SET) als Proxyfunktionen bereitstellt und diese über den Kommunikationskanal (T) aufruft.

3. Verfahren nach Anspruch 1 oder 2, wobei der Kommunikationskanal zwischen dem ersten Rechner (R1) und dem zweiten Rechner (R2) als Kommunikationskanal (T) für Rückrufe (CLLBCK) ausgebildet ist.

4. Verfahren nach einem der vorhergehenden Ansprüche, wobei Benachrichtigungen über den Kommunikationskanal (T) als Rückrufe (CLLBCK) ausgebildet sind.

5. Verfahren nach einem der vorhergehenden Ansprüche, wobei die Ereignisschleifen (EVLP1, EVLP2) als nicht sichtbare Fenster des Betriebssystems der Rechner (R1, R2) oder der Automatisierungsprogramms (ASP1, ASP2) ausgebildet sind.

6. Verfahren nach einem der vorhergehenden Ansprüche, wobei der Kommunikationskanal (T) als ein TCP- oder ein HTTPS-Tunnel ausgebildet ist.

7. Automatisierungssystem, aufweisend einen ersten Rechner (R1), einen zweiten Rechner (R2) und mindestens eine Automatisierungsvorrichtung (AV),
wobei der erste Rechner (R1) mit dem zweiten Rechner (R2) über ein Weitverkehrsnetz (WAN) verbindbar ist,
wobei der erste Rechner (R1), der zweite Rechner (R2) und die Automatisierungsvorrichtung (AV) zur Kommunikation, insbesondere zum Austausch von Daten, mittels eines applikationsspezifischen Protokolls (AP) über ein Weitverkehrsnetz (WAN), wobei das applikationsspezifische Protokoll (AP) eine Anwendungsschicht (APPL) aufweist,
wobei einer der Rechner (R1, R2) eine lokale Netzwerkverbindung (LAN) zur Automatisierungsvorrichtung (AV) aufweist, wobei auf dem ersten Rechner (R1) ein erstes Automatisierungsprogramm (ASP1) ausführbar ist,
wobei auf dem zweiten Rechner (R2) ein zweites Automatisierungsprogramm (ASP2) ausführbar ist,
wobei Verbindungen zwischen dem ersten Rechner (R1) und dem zweiten Rechner (R2) mittels eines Kommunikationskanals (T) über das Weitverkehrsnetz (WAN) herstellbar sind,
wobei die Rechner (R1, R2) und/oder die Automatisierungsprogramme (ASP1, ASP2) zur Durchführung eines Verfahrens nach einem der Ansprüche 1 bis 6 ausgebildet sind.

8. Automatisierungssystem nach Anspruch 7, aufweisend einen Proxy (PRX), der zur Bereitstellung von Funktionen (SEND, REC, SET) als Proxyfunktionen und zum Aufrufen der Funktionen (SEND, REC, SET) über den Kommunikationskanal (T) auf dem jeweils anderen Rechner (R1, R2) ausgebildet ist.

9. Automatisierungssystem nach einem der Ansprüche 7 oder 8, wobei einer der Rechner (R1, R2) als ein Teil der Automatisierungsvorrichtung (AV) ausgebildet ist.

10. Automatisierungssystem nach einem der Ansprüche 7 bis 9, wobei einer der Rechner (R1, R2) als ein virtuelles System ausgebildet ist.

## Claims

1. Method for communication, in particular for exchanging data, between a first computer (R1), a second computer (R2) and at least one automation device (AV) over a wide area network (WAN) by means of an application-specific protocol (AP),
wherein one of the computers (R1, R2) has a local network connection (LAN) to the automation device (AV),
wherein the application-specific protocol (AP) has an application layer (APPL),
wherein the first computer (R1) executes a first automation program (ASP1) and the second computer (R2) executes a second automation program (ASP2),
**characterised by the following steps:**
• registering a first event loop (EVLP1) having a first identification (ID1) in the application layer (APPL) of the application-specific protocol (AP) of one of the computers (R1, R2),
• establishing a communication channel (T) between the first computer (R1) and the second computer (R2),
• registering a second event loop (EVLP2) having a second identification (ID2) in the application layer (APPL) of the application-specific protocol (AP) of the respective other computer (R1, R2) and storing the first identification (ID1),
• storing the identification (ID1, ID2) of the event loop (EVLP1, EVLP2) for which the data is intended in the data,
• transferring the data to a send function (SEND),
• notifying the event loop (EVLP1, EVLP2) whose identification (ID1, ID2) is stored in the data that the data is ready for transmission, and
• retrieving the data by means of a receive function (REC) via the communication channel (T).

2. Method according to claim 1, wherein functions (SEND, REC, SET) are implemented in such a way that a proxy (PRX) provides the functions (SEND, REC, SET) as proxy functions and invokes these via the communication channel (T).

3. Method according to claim 1 or 2, wherein the communication channel between the first computer (R1) and the second computer (R2) is embodied as a communication channel (T) for callbacks (CLLBCK).

4. Method according to one of the preceding claims, wherein notifications via the communication channel (T) are embodied as callbacks (CLLBCK).

5. Method according to one of the preceding claims, wherein the event loops (EVLP1, EVLP2) are embodied as invisible windows of the operating system of the computers (R1, R2) or of the automation program (ASP1, ASP2).

6. Method according to one of the preceding claims, wherein the communication channel (T) is embodied as a TCP or an HTTPS tunnel.

7. Automation system having a first computer (R1), a second computer (R2) and at least one automation device (AV),
wherein the first computer (R1) can be connected to the second computer (R2) via a wide area network (WAN),
wherein the first computer (R1), the second computer (R2) and the automation device (AV) are embodied for communication, in particular for exchanging data, over a wide area network (WAN) by means of an application-specific protocol (AP),
wherein the application-specific protocol (AP) has an application layer (APPL),
wherein one of the computers (R1, R2) has a local network connection (LAN) to the automation device (AV),
wherein a first automation program (ASP1) is executable on the first computer (R1),
wherein a second automation program (ASP2) is executable on the second computer (R2),
wherein connections between the first computer (R1) and the second computer (R2) can be established by means of a communication channel (T) over the wide area network (WAN), wherein the computers (R1, R2) and/or the automation programs (ASP1, ASP2) are embodied for performing a method according to one of claims 1 to 6.

8. Automation system according to claim 7, having a proxy (PRX) which is embodied for providing functions (SEND, REC, SET) as proxy functions and for invoking the functions (SEND, REC, SET) via the communication channel (T) on the respective other computer (R1, R2).

9. Automation system according to one of claims 7 or 8, wherein one of the computers (R1, R2) is embodied as part of the automation device (AV).

10. Automation system according to one of claims 7 to 9, wherein one of the computers (R1, R2) is embodied as a virtual system.

## Revendications

1. Procédé de communication, notamment d'échange de données entre un premier ordinateur (R1), un deuxième ordinateur (R2) et au moins une installation (AV) d'automatisation au moyen d'un protocole (AP) spécifique à une application par l'intermédiaire d'un réseau (WAN) de télécommunication à grande distance,
dans lequel l'un des ordinateurs (R1, R2) a une liaison (LAN) de réseau local avec l'installation (AV) d'automatisation, le protocole (AP) spécifique ayant une application ayant une couche (APPL) d'application,
dans lequel le premier ordinateur (R1) exécute un premier programme (ASP1) d'automatisation et le deuxième ordinateur (R2) exécute un deuxième programme (ASP2) d'automatisation,
**caractérisé par** les stades suivants :
• enregistrement d'une première boucle (EVLP1) d'événement par une première identification (ID1) dans la couche (APPL) d'application du protocole (AP) spécifique à une application de l'un des ordinateurs (R1, R2),
• établissement d'un canal (T) de communication entre le premier ordinateur (R1 ) et le deuxième ordinateur (R2),
• enregistrement d'une deuxième boucle (EVLP2) d'événement par une deuxième identification (ID2) dans la couche (APPL) d'application du protocole (AP) spécifique à une application de l'autre ordinateur (R1, R2) et mise en mémoire de la première identification (ID1),
• mise en mémoire dans les données de l'identification (ID1, ID2) des boucles (EVLP1, EVLP2) d'identification, pour lesquelles les données sont déterminées,
• transmission des données à une fonction (SEND) d'envoi,
• notification aux boucles (EVLP1, EVLP2) d'événement, dont l'identification (ID1, ID2) est mise en mémoire dans les données, que les données sont prêtes pour la transmission et
• appel des données par une fonction (REC) de réception par l'intermédiaire du canal (T) de communication.

2. Procédé suivant la revendication 1, dans lequel on réalise des fonctions (SEND, REC, SET) de manière à ce qu'un proxy (PRX) mette les fonctions (SEND, REC, SET) sous la forme de fonctions de proxy et les appelle par le canal (T) de communication.

3. Procédé suivant la revendication 1 ou 2, dans lequel le canal de communication entre le premier ordinateur (R1) et le deuxième ordinateur (R2) est constitué sous la forme d'un canal (T) de communication pour des rappels (CLLBCK).

4. Procédé suivant l'une des revendications précédentes, dans lequel des notifications, par le canal (T) de communication, sont constituées sous la forme de rappels (CLLBCK).

5. Procédé suivant l'une des revendications précédentes, dans lequel les boucles (EVLP1, EVLP2) d'événement sont constituées sous la forme de fenêtre non visible du système de fonctionnement des ordinateurs (R1, R2) ou du programme (ASP1, ASP2) d'automatisation.

6. Procédé suivant l'une des revendications précédentes, dans lequel le canal (T) de communication est constitué sous la forme d'un tunnel TCP ou d'un tunnel HTTPS.

7. Système d'automatisation comportant un premier ordinateur (R1), un deuxième ordinateur (R2) et au moins une installation (AV) d'automatisation,
dans lequel le premier ordinateur (R1) peut être relié au deuxième ordinateur (R2) par un réseau (WAN) de télécommunication à grande distance,
dans lequel le premier ordinateur (R1), le deuxième ordinateur (R2) et l'installation (AV) d'automatisation sont prévus pour la communication, notamment pour l'échange de données, au moyen d'un protocole (AP) spécifique à une application, par l'intermédiaire d'un réseau (WAN) de télécommunication à grande distance, le protocole (AP) spécifique à une application ayant une couche (APPL) d'application,
dans lequel l'un des ordinateurs (R, R2) a une liaison (LAN) de réseau local avec le système (AV) d'automatisation,
dans lequel un premier programme (ASP1) d'automatisation peut être réalisé sur le premier ordinateur (R1),
dans lequel un deuxième programme (ASP2) d'automatisation peut être réalisé sur le deuxième ordinateur (R2),
dans lequel des liaisons entre le premier ordinateur (R1) et le deuxième ordinateur (R2) peuvent être produites au moyen d'un canal (T) de communication, par l'intermédiaire du réseau (WAN) de télécommunication à grande distance,
dans lequel les ordinateurs (R1, R2) et/ou les programmes (ASP1, ASP2) d'automatisation sont constitués pour effectuer un procédé suivant l'une des revendications 1 à 6.

8. Système d'automatisation suivant la revendication 7, comportant un proxy (PRX), qui est constitué pour la mise à disposition de fonctions (SEND, REC, SET), comme fonctions de proxy, et pour l'appel des fonctions (SEND, REC, SET) par l'intermédiaire du canal (T) de communication sur l'autre ordinateur (R1, R2).

9. Système d'automatisation suivant l'une des revendications 7 ou 8, dans lequel l'un des ordinateurs (R1, R2) est constitué comme partie de l'installation (AV) d'automatisation.

10. Système d'automatisation suivant l'une des revendications 7 à 9, dans lequel l'un des ordinateurs (R1, R2) est constitué sous la forme d'un système virtuel.
